# EUROPÄISCHE PATENTSCHRIFT

(11) **EP 3 458 922 B1**
(45) Veröffentlichungstag und Bekanntmachung des Hinweises auf die Patenterteilung: **23.07.2025**
(21) Anmeldenummer: 17761233.0
(22) Anmeldetag: 28.08.2017
(51) Int. Cl.: G05B 19/418

(54) **VERFAHREN UND VORRICHTUNG ZUR FERNÜBERWACHUNG VON ANLAGEN UND INSBESONDERE ANLAGEN DER GETRÄNKEHERSTELLENDEN INDUSTRIE**
METHOD AND APPARATUS FOR THE REMOTE MONITORING OF INSTALLATIONS AND IN PARTICULAR INSTALLATIONS IN THE BEVERAGE MANUFACTURING INDUSTRY
PROCÉDÉ ET DISPOSITIF DE TÉLÉSURVEILLANCE D'INSTALLATIONS ET NOTAMMENT D'INSTALLATIONS DE L'INDUSTRIE DE PRODUCTION DE BOISSONS

(30) Priorität: 26.08.2016 DE 102016115969
(43) Veröffentlichungstag der Anmeldung: 27.03.2019
(73) Patentinhaber: Krones AG, 93073 Neutraubling (DE)
(72) Erfinder: ZISTLER, Johann, 93073 Neutraubling (DE)
(74) Vertreter: Hannke Bittner & Partner mbB Regensburg
(86) Internationale Anmeldenummer: PCT/EP2017/071564
(87) Internationale Veröffentlichungsnummer: WO 2018/037133

(56) Entgegenhaltungen:
- PATRIK SPIESS ET AL: "SOA-Based Integration of the Internet of Things in Enterprise Services", WEB SERVICES, 2009. ICWS 2009. IEEE INTERNATIONAL CONFERENCE ON, IEEE, PISCATAWAY, NJ, USA, 6 July 2009 (2009-07-06), pages 968 - 975, XP031497913, ISBN: 978-0-7695-3709-2

## Beschreibung

Die vorliegende Erfindung bezieht sich auf ein Verfahren und eine Vorrichtung zur Fernüberwachung von Anlagen und insbesondere Anlagen zur Herstellung von Getränken. Aus dem Stand der Technik ist es seit längerem bekannt, dass Anlagen aus der Ferne, beispielsweise durch den Maschinenhersteller, überwacht werden, um auf diese Weise schnell auf Fehler reagieren zu können und um dem Kunden möglichst präzise und schnelle Anweisungen geben zu können. Dabei ist es bekannt, dass Maschinendaten über eine Datenverbindung, beispielsweise eine Internetverbindung, durch einen Mitarbeiter des Herstellers ausgelesen und ausgewertet werden. Allerdings ist hierbei der Aufwand für die Auswertung jeder einzelnen Maschine relativ hoch und umständlich. Daneben werden grundsätzlich sämtliche maschinenrelevanten Daten ausgelesen und an den Hersteller übergeben. Dies ist auch teilweise bei den Betreibern der jeweiligen Anlagen nicht gewünscht. So ist es beispielsweise denkbar, dass die Anlagenbetreiber nicht wünschen, dass etwa Daten herausgegeben werden, welche einen Rückschluss auf eine Ausstoßleistung oder Rezeptur ermöglichen.

PATRIK SPIESS ET AL: "SOA- Based integration of the Internet of Things in Enterprise Services", WEB SERVICES, 2009. ICWS 2009. IEEE INTERNATIONAL CONFERENCE ON, IEEE, PISCATAWAY, NJ, USA, 6. Juli 2009 (2009-07-06), Seiten 968-975, XP031497913, ISBN: 978-0-7695-3709-2 schlägt eine Architektur für eine effektive Integration des Internets der Dinge in Dinge in Unternehmensdienste vor. Diese "Internet der Dinge"-Infrastruktur wird stark in die Umgebung integriert sein, und ihre Integration in die Unternehmenssysteme wird nicht nur die Grenze zwischen den IT-Systemen der Unternehmen und der realen Welt weiter verwischen, sondern auch die Art und Weise verändern, wie diese die Dienste entwerfen, bereitstellen und nutzen. Für Unternehmen, die nun eng mit der realen Welt zusammenarbeiten können, ergeben sich neue Möglichkeiten mit der realen Welt.

Der vorliegenden Erfindung liegt daher die Aufgabe zugrunde, den Aufwand für eine derartige Fernüberwachung zu reduzieren. Auch soll dem Sicherheits- und Geheimhaltungsbedürfnis unterschiedlicher Kunden besser Rechnung getragen werden.

Diese Aufgaben werden erfindungsgemäß durch ein Verfahren und eine Vorrichtung nach den unabhängigen Patentansprüchen erreicht. Vorteilhafte Ausführungsformen und Weiterbildungen sind Gegenstand der Unteransprüche.

Bei einem erfindungsgemäßen Verfahren zur Fernüberwachung einer Herstellungsanlage, insbesondere einer Verpackungsanlage und insbesondere einer Anlage der getränkeherstellenden Industrie weist die Anlage eine Vielzahl von Arbeitseinheiten auf sowie eine Datensammeleinrichtung, mit welcher diese Arbeitseinheiten wenigstens teilweise und/oder wenigstens zeitweise zur Datenübertragung verbunden sind wobei die Datensammeleinrichtung für die Arbeitseinheiten relevante Daten sammelt. Weiterhin ist eine Datenübertragungseinrichtung vorgesehen, welche Daten von der Datensammeleinrichtung an eine Datenerfassungseinrichtung überträgt.

Erfindungsgemäß werden unterschiedliche Anteile dieser Daten an unterschiedliche Empfänger übermittelt und durch einen Benutzer ist wenigstens teilweise bestimmbar, welche Daten an welchen Empfänger übermittelt werden. Während also im Stand der Technik alle Daten an den gleichen Empfänger übermittelt wurden, etwa den Maschinenhersteller, wird im Rahmen der Erfindung vorgeschlagen, dass ein Bestimmter Anteil der Daten zu einem ersten Empfänger, beispielsweise einem Benutzer oder Bediener der Anlage, oder aber ein entsprechendes Empfangsgerät im Bereich des Benutzers der Anlage übermittelt wird und ein anderer Anteil der Daten an einen zweiten Empfänger übermittelt werden, etwa einen Hersteller der Anlage oder aber ein entsprechendes Empfangsgerät im Bereich des Maschinenherstellers. Auch wäre es möglich, dass ein bestimmter Anteil an Daten sowohl an den Betreiber der Anlage als auch den Hersteller übermittelt werden. Bevorzugt sind diese jeweils unterschiedlichen Anteile durch einen Benutzer der Anlage bestimmbar.

Dabei kann es sich um eine vollkommen freie Bestimmbarkeit handeln, es kann jedoch auch vorgesehen sein, dass der Maschinenbenutzer nur hinsichtlich eines bestimmten Anteils der Daten bestimmen kann, an wen diese übermittelt werden sollen. So kann vorgesehen sein, dass ein bestimmter Anteil an Daten stets etwa an den Maschinenhersteller übermittelt wird. Bei dem Benutzer handelt es sich insbesondere um einen Benutzer der Anlage bzw. den Maschinenbetreiber. Es wäre jedoch auch möglich, dass die Bestimmung durch den Hersteller oder einen Dritten erfolgt.

Die Datenerfassungseinrichtung kann dabei an unterschiedlichen Standorten vorgesehen sein. So ist es möglich, dass sich die Datenerfassungseinrichtung am Standort des Maschinenherstellers befindet. In diesem Falle werden die Daten bevorzugt kabellos von der Datensammeleinrichtung an die Datenerfassungseinrichtung übertragen. In diesem Falle handelt es sich bei der Datenübertragungseinrichtung um eine Datenfernübertragungseinrichtung. Daneben wäre es jedoch auch denkbar, dass die Datenerfassungseinrichtung sich an dem Standort der zu betreibenden Maschine befindet, also insbesondere in der Sphäre des Maschinenbedieners. In diesem Fall können die Daten auch nicht kabellos von der Datensammeleinrichtung an die Datenerfassungseinrichtung übertragen werden. Auch wäre es in diesem Falle möglich, dass die Datensammeleinrichtung und die Datenerfassungseinrichtung als bauliche Einheit ausgebildet sind. Die Datenübertragungseinrichtung könnte hier im einfachsten Fall als Schnittstelle zwischen der Datensammeleinrichtung und der Datenerfassungseinrichtung ausgebildet sein.

Auch könnte sich die Datenerfassungseinrichtung an einem weiteren Ort befinden, etwa dem Ort eines zentralen Servers, von dem aus mehrere Anlagen überwacht werden können. Die Datenerfassungseinrichtung könnte auch als zentrale Datenerfassungseinrichtung ausgestaltet, sein, welche die Daten einer Vielzahl von Anlagen und/oder Anlagenteilen erfasst.

Die Entscheidung über den Ort dieser Datenerfassungseinrichtung kann sich danach richten, wer letztlich die Entscheidung treffen soll, welche Daten in welcher Weise behandelt werden. Soll dies durch den Maschinenbediener erfolgen, so wird sich die Datenerfassungseinrichtung bevorzugt an dem Ort der zu betreibenden Maschine befinden. Soll etwa der Maschinenhersteller diese Entscheidung treffen können, so kann sich bevorzugt die Datenerfassungseinrichtung an dessen Standort befinden.

Die Datenübertragungseinrichtung und/oder die Datensammeleinrichtung könnte bevorzugt auch als Datenselektoreinrichtung ausgestaltet sein und/oder eine solche Datenselektoreinrichtung aufweisen, also als Einrichtung die nicht nur zum Übertragen von Daten dient, sondern welche bereits eine Auswahl der zu übertragenden Daten trifft. Auch wäre es möglich, dass an mehreren Orten derartige Datenselektoreinrichtungen vorgesehen sind und so an mehreren Stellen solche Datenauswahlen getroffen werden können. Dabei könnte ein Abgleich zwischen diesen eingegebenen Daten vorgenommen werden. Sofern diese Vorgaben übereinstimmen, könnten diese übernommen werden, falls die Vorgaben nicht übereinstimmen könnten automatisiert Vorschläge für die Handhabung der Daten unterbreitet werden.

Bevorzugt werden die Daten an wenigstens zwei unterschiedliche Empfänger übermittelt, bevorzugt an genau zwei unterschiedliche Empfänger. Bei einem weiteren bevorzugten Verfahren ist es auch möglich, dass die Daten zeitversetzt an die beiden unterschiedlichen Empfänger übermittelt werden.

Durch den Benutzer sind daher bevorzugt Regeln bestimmbar, nach denen festgelegt ist, welche Daten an welchen Empfänger übermittelt werden.

Bei diesen Daten kann es sich beispielsweise um Rohdaten, wie etwa gemessene Daten handeln, jedoch auch um hieraus abgeleitete Daten, beispielsweise aus diesen Daten berechnete Werte. So ist es möglich, dass die Datensammeleinrichtung Rohdaten sammelt und aus diesen Daten weitere Daten ableitet und diese so abgeleiteten Daten an die jeweiligen Empfänger weitergeleitet werden.

Bevorzugt ist - insbesondere durch einen Nutzer der Datensammeleinrichtung und/oder der Datenerfassungseinrichtung - wenigstens eine Eigenschaft und insbesondere eine Art und/oder ein Umfang der zu übertragenden Daten bestimmbar. Zu diesem Zweck kann beispielsweise eine Datenselektoreingabeeinrichtung vorgesehen sein, über welche der Benutzer die Art, den Umfang von zu übertragenden Daten eingeben kann.

Bei den Daten kann es sich beispielsweise um Rohdaten handeln, welche direkt von entsprechenden Sensoren aufgenommen werden, wie beispielsweise Daten, welche für auftretende Vibrationen charakteristisch sind. Daneben kann es sich um Daten aus einer kontinuierlichen Zustandsüberwachung (condition monitoring) handeln.

Daneben ist es möglich, dass (beispielsweise durch die Datensammeleinrichtung) bereits eine Extraktion von aufgenommenen Daten vorgenommen wird, also beispielsweise eine Aussage über deren Relevanz für den Maschinenbetrieb (niedrig, mittel, hoch) vorgenommen wird.

Es wird also erfindungsgemäß vorgeschlagen, dass nicht - wie im Stand der Technik üblich - sämtliche Daten übertragen werden, sondern die Nutzer eine Vorauswahl treffen können, welche Daten tatsächlich übertragen werden sollen und insbesondere, an welchen Empfänger welche Daten übermittelt werden. Auf diese Weise kann einerseits der Aufwand zur Überwachung der Maschine geringer gehalten werden, andererseits kann auch einem Sicherheits- oder Geheimhaltungsinteresse des Nutzers der Anlage Rechnung getragen werden. Bevorzugt befindet sich ein Empfänger in einem (insbesondere geographischen Bereich der zu überwachenden Anlage) und der andere Empfänger hiervon entfernt.

Weiterhin wäre es auch möglich, dass bestimmte Daten aus einem Datensatz gefiltert werden und einem der beiden Empfänger die nach dem Filter verbleibenden Daten übermittelt werden und dem anderen der beiden Empfänger die herausgefilterten Daten übermittelt werden.

Die Arbeitseinheiten bzw. Maschinen befinden sich damit bevorzugt in einem internen Netz und sind (bevorzugt lokal) mit einer Datensammeleinrichtung, im Folgenden auch als "connect box" bezeichnet, verbunden. Bevorzugt besteht daher wenigstens zeitweise und bevorzugt nur zeitweise eine Datenkommunikationsverbindung zwischen der Datensammeleinrichtung und der Datenerfassungseinrichtung.

Diese Datensammeleinrichtung bzw. connect box ruft - bevorzugt in einem Zeitintervall - die Maschinendaten in dem (internen) Netz auf und wertet diese aus. Je nach dem Ergebnis der Auswertung kann unterschiedlich reagiert werden. So ist es beispielsweise möglich, dass die Daten weitergesendet werden zu einer zentralen Einheit (insbesondere der Datenerfassungseinrichtung), es ist möglich, diese (insb. lokal) abzuspeichern oder den Maschinenbetreiber bzw. Kunden vor Ort darüber zu informieren. Eine zentrale Einheit kann Daten von mehreren connect boxes (bzw. Datensammeleinrichtungen) enthalten. Diese zentrale Einheit - oben auch als Datenerfassungseinrichtung bezeichnet - kann wiederum entscheiden, wie mit diesen Daten weiter umgegangen wird und diese Daten können dann beispielsweise einem Maschinenhersteller übermittelt werden.

Bei einem bevorzugten Verfahren ist es auch möglich, dass lokal abgespeicherte Daten zu einem anderen Zeitpunkt wieder aufgerufen werden. Bevorzugt kann die Datensammeleinrichtung unter unterschiedlichen Betriebsbedingungen betrieben werden. So kann beispielsweise durch den Benutzer vorgegeben werden, wie die Datensammeleinrichtung bestimmte Daten behandelt.

Weiterhin ist es auch möglich, dass die Datensammeleinrichtung mit unterschiedlichen Steuerungen kommuniziert und so etwa Daten aus unterschiedlichen Steuerungseinrichtungen sammelt.

Bei einem weiteren vorteilhaften Verfahren werden wenigstens zeitweise Sicherungskopien bzw. Backups angelegt. In diesen Sicherungskopien können beispielsweise Daten abgelegt werden, wie Maschinenparameter, insbesondere solche welche für den laufenden Betrieb verwendet werden. Daneben können im Rahmen dieses Backups Daten gesammelt werden, welche etwa für Störungen des Maschinenbetriebs charakteristisch sind, oder aber Daten, welche sich auf das zu behandelnde Produkt beziehen. Zu diesem Zweck kann die Anlage beispielsweise eine Speichereinrichtung aufweisen, welche zum Speichern dieser Daten geeignet und bestimmt ist. Ein derartiges Backup kann dabei bevorzugt in vorgegebenen Abständen und insbesondere in regelmäßigen Abständen angelegt werden. Auch kann in solchen Backups festgehalten werden, welche Änderungen an Parametern durch welchen Maschinenbenutzer oder Maschinenbediener vorgenommen wurden. Weiterhin können auch Protokolle über den Maschinenbetrieb angelegt werden.

Damit erfolgt zumindest eine Auswertung der Daten automatisch. Es ist dabei möglich, dass nur besonders für den Betrieb der Maschine relevante Informationen an den Maschinenhersteller weitergeleitet werden. Weiterhin ist es auch möglich, dass bei Bedarf sämtliche Daten aufgerufen werden können.

Erfindungsgemäß werden die Daten hinsichtlich ihrer Relevanz bzw. Wichtigkeit für den Betrieb der Maschine eingeteilt bzw. eingruppiert, sodass die Einteilung unter Berücksichtigung eines im Hinblick auf diese Daten zu erwartenden Störungsfalles erfolgt und damit Daten, welche auf einen schwerwiegenden oder in Kürze bevorstehenden Ausfall der Anlage schließen lassen einer anderen Gruppe zugeordnet werden, als Daten, welche etwa auf eine fortgeschrittene Abnutzung eines bestimmten Maschinenelements oder eine Verschmutzung des Maschinenelements schließen lassen.

Bevorzugt handelt es sich bei den Arbeitseinheiten um Arbeitseinheiten, welche ein bestimmtes Produkt, wie etwa ein Behältnis in aufeinanderfolgenden Schritten behandeln, beispielsweise eine Umformungseinrichtung, welche aus Kunststoffvorformlingen Kunststoffflaschen formt, eine Fülleinrichtung, welche diese Flaschen mit einer Flüssigkeit befüllt und schließlich eine Etikettiereinrichtung, welche die Befüllten Flaschen mit Etiketten versieht.

Bevorzugt weisen die einzelnen Anlagenteile bzw. Arbeitseinheiten jeweils Steuerungen auf. Daneben ist bevorzugt eine zentrale Steuerungseinrichtung vorgesehen, welche sämtliche Arbeitseinheiten auch in Bezug zueinander steuert.

Bei einem weiteren bevorzugten Verfahren werden die Daten wiederholt gesammelt bzw. zu vorgegebenen Zeitpunkten und/oder Zeitfenstern gesammelt.

Bei einem weiteren bevorzugten Verfahren kommuniziert die Datensammeleinrichtung nur teilweise und/oder nur zeitweise mit der Datenerfassungseinrichtung bzw. leitet nur manche Daten weiter. Bei diesem Verfahren wird bereits im Bereich der Datensammeleinrichtung entschieden, welche Daten an die Datenerfassungseinrichtung weitergegeben werden. Daneben wäre es jedoch auch möglich, dass sämtliche Daten von der Datensammeleinrichtung auf die Datenerfassungseinrichtung übertragen werden und diese entscheidet, wie mit den Daten weiterverfahren wird. So wäre es möglich, dass einzelne Daten an den Kunden zurückübermittelt werden und andere Daten beispielsweise an den Maschinenhersteller übermittelt werden.

Bevorzugt ist die Datenübertragungseinrichtung zur nur zeitweisen Übertragung von Daten geeignet und bestimmt. Bei einem weiteren bevorzugten Verfahren erfolgt die Übertragung der Daten von der Datensammeleinrichtung an die Datenerfassungseinrichtung über das Internet. Besonders bevorzugt erfolgt die Übertragung der Daten über eine gesicherte Verbindung, beispielsweise eine sogenannte VPN-Leitung. Weiterhin ist es auch möglich, dass die Datenübertragungseinrichtung ein Bestandteil der Datensammeleinrichtung ist.

Bevorzugt sind die einzelnen Arbeitseinheiten bzw. Maschinen über ein internes Netzwerk verbunden. Dieses Netzwerk erfasst bevorzugt nur diejenigen Arbeitseinheiten bzw. Maschinen, die an einem bestimmten Standort stehen. An diesem Standort befindet sich die Datensammeleinrichtung bzw. connect box, die mit den Maschinen bevorzugt über dieses Netzwerk verbunden ist. Die connect box verarbeitet bevorzugt die Daten von den einzelnen Arbeitseinheiten und entscheidet, wie mit diesen verfahren wird. Mehrere connect boxes können mit einer zentralen Einheit der oben genannten Datenerfassungseinrichtung durch eine Datenleitung und insbesondere einen temporären VPN-Tunnel verbunden sein. Diese Datensammeleinrichtungen kommunizieren bevorzugt nur mit der zentralen Einheit, wenn es erforderlich ist, d.h. es wird bevorzugt eine gesteuerte Kommunikation vorgenommen.

Die zentrale Einheit bzw. die Datenerfassungseinrichtung entscheidet dann, wie mit den Informationen dieser Datensammeleinrichtungen umgegangen wird.

Erfindungsgemäß überträgt die Datenübertragungseinrichtung lediglich eine Teilmenge der erfassten Daten. Dies bedeutet, dass bereits auf der Ebene der Datensammeleinrichtung entschieden wird, welche Daten an die Datenerfassungseinrichtung weitergeleitet werden und welche nicht. Es wäre jedoch auch möglich, dass die Datenerfassungseinrichtung lediglich eine Teilmenge der Daten an den Maschinenhersteller herausgibt. Weiter erfindungsgemäß ist diese Teilmenge durch den Benutzer konfigurierbar. Dies bedeutet, dass der Benutzer frei entscheiden kann, welche Daten an den Maschinenhersteller herausgegeben werden und welche nicht. Auch wäre es möglich, dass die Datenübertragungseinrichtung sämtliche Daten an die Datenerfassungseinrichtung überträgt und erst auf der Ebene der Datenerfassungseinrichtung entschieden wird, an welchen Empfänger welche Daten übermittelt werden.

Mit anderen Worten ist ein Niveau der Ausgabe von Daten frei konfigurierbar. So wäre es im Extremfall sogar möglich, dass an den Maschinenhersteller keinerlei Daten herausgegeben werden oder in einem anderen Extremfall sämtliche Daten. Auf diese Weise kann den Sicherheitsinteressen der Anlagenbetreiber Rechnung getragen werden. Bevorzugt ist also konfigurierbar, an welchen oder welche Benutzer welche Daten herausgegeben werden. So wäre es beispielsweise möglich, dass lediglich Daten an den Maschinenhersteller herausgegeben werden, welche auf schwere Fehler oder einen bevorstehenden Ausfall der Anlage schließen lassen, so dass dieser aus der Ferne schnell reagieren kann. Auch wäre es möglich, dass der Maschinenhersteller über wiederholt auftretende Fehler beim Anlagenbetrieb hingewiesen wird, um so eine korrekte Gegenmaßnahme einleiten zu können oder um den Kunden auf eine mögliche Fehlerbehebung hinweisen zu können.

Es wäre jedoch auch möglich, dass die Konfiguration sich im Laufe der Zeit bevorzugt auch selbsttätig ändert. So ist es beispielsweise möglich, dass es der Kunde wünscht, dass bei Auftreten von bestimmten Fehlern, nachdem er eine Möglichkeit zur Federbehebung erfahren hat, diese nicht mehr an den Hersteller weitergeleitet wird, sondern er diese Fehler selbsttätig beheben kann. Bevorzugt handelt es sich bei der Datensammeleinrichtung um eine Recheneinheit, bei der eine Speichermenge, eine Art der Komprimierung und/oder ein Zeitintervall der Übertragung eingestellt werden kann. Bevorzugt besteht ein Regel- und Alarmmanagement. Dies bedeutet, dass bevorzugt bei der Datensammeleinrichtung eingegebene Daten hinsichtlich ihrer Relevanz (für den Maschinen- bzw. Anlagenbetrieb) unterschiedlich eingruppiert werden.

Die Datensammeleinrichtung ist dazu bestimmt, von den einzelnen Arbeitseinheiten Daten zu übernehmen. Diese Daten sind dabei bevorzugt aus einer Gruppe von Daten ausgewählt, welche Rohdaten, aggregierte Daten, Datensicherungen, Backups, Logfiles und Störmeldungen enthält. Dabei holt die Sammeleinrichtung bevorzugt von den Arbeitseinheiten diese Daten mit konfigurierbaren Parametern ab bzw. der Datensammeleinrichtung werden diese Daten übermittelt. Dabei können beispielsweise die Zeitintervalle eingestellt werden, in denen die Daten abgeholt werden, weiterhin können die Datenmengen konfiguriert werden und gegebenenfalls kann auch konfiguriert werden, ob und in welcher Weise die jeweiligen Daten geändert werden.

Weiterhin wertet bevorzugt die Datensammeleinrichtung die so gesammelten Daten aus, wobei hier auch ein Regelmanagement Anwendung finden kann. Bevorzugt werden diese Daten temporär und/oder lokal gespeichert. Die einzelnen Regeln können zu Alarmen führen. Auch wäre es möglich, dass bestimmte Daten bestimmten Alarmen zugeordnet werden.

Hinsichtlich dieser Alarme kann bevorzugt entschieden werden, an welchen Empfänger sie weitergeleitet werden. Dabei ist es möglich, auftretende Alarme in unterschiedliche Alarmstufen zu unterteilen. So können beispielsweise die ausgewerteten Regeln in verschiedene Alarme unterteilt werden. Je nach einer Alarmstufe werden für die Daten unterschiedliche Aktionen ausgeführt.

Dabei kann beispielsweise folgende Priorisierung vorgenommen werden. Einer ersten Priorität wird der Alarm an die Datenerfassungseinrichtung weitergeleitet. Hierbei kann es sich beispielsweise um besonders kritische Alarmsituationen handeln, bei denen ein direktes Eingreifen des Herstellers vorgenommen werden sollte. In einer zweiten Priorität wird ein entsprechender Alarm an den Kunden gesendet. Der Kunde kann gegebenenfalls auf diesen Alarm reagieren. Weiterhin können bei dieser Prioritätsstufe Alarme auch eskalations- und zeitgesteuert an die zentrale Erfassungseinheit weitergleitet werden. Hierbei kann es sich beispielsweise um Alarme mit mittlerer Priorität handeln.

Im Rahmen einer dritten bzw. niedrigsten Eskalationsstufe wird ein Alarm nur intern beim Kunden abgearbeitet.

Falls die Daten an die Erfassungseinheit übermittelt werden sollen, wird bevorzugt zunächst eine sichere Verbindung, wie insbesondere ein VPN-Tunnel, aufgebaut. Dies erfolgt bevorzugt durch die Datensammeleinrichtung und/oder die Datenübertragungseinrichtung. Nur bei Bestehen einer derartigen gesicherten Verbindung kann die Datensammeleinrichtung eine Verbindung zur Erfassungseinrichtung haben. Dabei ist bevorzugt auch wiederum dieser Aufbau der gesicherten Datenverbindung durch definierbare Parameter und bevorzugt durch frei definierbare Parameter steuerbar. Bei diesen Parametern kann es sich beispielsweise um Zeitintervalle, Datenmengen und Dateitypen sowie auch um Komprimierungen und dergleichen handeln.

Bei einem weiteren bevorzugten Verfahren entscheidet dann die Erfassungseinrichtung (gegebenenfalls jedoch auch die Datensammeleinrichtung) über die weitere Vorgehensweise und/oder die Verarbeitung der eingehenden Daten. So können beispielsweise Alarme, Tickets oder eine Archivierung ausgelöst werden. In einem weiteren bevorzugten Verfahren bekommt die zentrale Einheit bzw. die Erfassungseinrichtung die Datenalarme von der Sammeleinrichtung übermittelt bzw. zugesendet.

In einem weiteren bevorzugten Verfahren ist wenigstens ein Anteil der gesammelten Daten von Messeinrichtungen gemessene Daten wenigstens einer Arbeitseinheit. So ist es möglich, dass insbesondere im laufenden Betrieb derartige Daten gemessen werden. Weiterhin kann es sich bei den Daten auch um Langzeitdaten handeln, die besonders bevorzugt gefiltert an die Datenerfassungseinrichtung oder auch an den Maschinenhersteller ausgegeben werden können. Bei einem weiteren bevorzugten Verfahren sind also Messeinrichtungen vorgesehen, welche insbesondere im Betrieb Messungen vornehmen. Daneben kann es sich bei den Langzeitdaten auch um Zeitdaten handeln.

Bei einem weiteren bevorzugten Verfahren ist die Anlage an einem ersten geographischen Ort angeordnet und die Datenerfassungseinrichtung an einem zweiten geographischen Ort, der sich von dem ersten geographischen Ort unterscheidet. Auf diese Weise kann die betreffende Anlage ferngewartet bzw. aus der Ferne überprüft werden.

Besonders bevorzugt wird hier ein Anteil der Daten an dem ersten geographischen Ort ausgegeben, d.h. an dem Ort, an dem sich die Anlage befindet. Bevorzugt wird auch ein Anteil der Daten an einem zweiten geographischen Ort ausgegeben. So kann es beispielsweise möglich sein, dass solche Alarme, auf welche der Benutzer unmittelbar und selbst reagieren will, an dem ersten geographischen Ort ausgegeben werden.

Bei einem weiteren bevorzugten Verfahren sind die Daten aus einer Gruppe von Daten ausgewählt, welche Rohdaten, aggregierte Daten, Datensicherungen, Backups, Lockfiles, Störmeldungen, aus den Daten ermittelte Alarme und dergleichen enthält.

Bei einem weiteren bevorzugten Verfahren ist wenigstens eine Arbeitseinheit aus einer Gruppe von Arbeitseinheiten ausgewählt, welche Umformungseinrichtungen zum Umformen von Kunststoffvorformlingen zu Kunststoffbehältnissen, Erwärmungseinrichtungen zum Erwärmen von Kunststoffvorformlingen, Sterilisationseinrichtungen zum Sterilisieren von Kunststoffvorformlingen oder Kunststoffflaschen, Fülleinrichtungen zum Befüllen von Behältnissen, Etikettiereinrichtungen zum Etikettieren von Behältnissen, Verschließeinrichtungen zum Verschließen von Behältnissen und dergleichen enthält.

Vorteilhaft handelt es sich bei der Anlage um eine solche Anlage, welche ein bestimmtes Produkt, wie beispielsweise Kunststoffflaschen, sukzessiv verarbeitet. So kann es sich beispielsweise bei der ersten Anlageneinheit bzw. Arbeitseinheit um eine Blasformmaschine handeln, welche aus Kunststoffvorformlingen Kunststoffflaschen erzeugt. Hieran kann sich eine zweite Arbeitseinheit in Form einer Füllmaschine anschließen, welche die so erzeugten Flaschen mit einer Flüssigkeit und insbesondere mit einem Getränk befüllt. An diese Arbeitseinheit kann sich wiederum eine Verschließeinrichtung oder eine Etikettiereinrichtung und/oder eine Druckeinrichtung, welche die Behältnisse mit Drucken versieht, anschließen.

Bei einem weiteren bevorzugten Verfahren werden von der Datenfernübertragungseinrichtung nur bestimmte Daten an die Datenerfassungseinrichtung übertragen und/oder von der Datenerfassungseinrichtung nur bestimmte Daten weiterverarbeitet. Auch im Rahmen dieser Weiterverarbeitung kann entschieden werden, an welchen oder welche Empfänger die jeweiligen Daten oder sich aus diesen Daten ergebende Informationen wie etwa Alarme weitergeleitet werden. Weiterhin ist es auch möglich, dass die Datenfernübertragungseinrichtung ein Bestandteil der Datensammeleinrichtung ist.

Bei einem weiteren bevorzugten Verfahren werden bestimmte Daten am Ort der Anlage an einen Benutzer bzw. Empfänger ausgegeben. Zu diesem Zweck kann die Anlage eine Informationsausgabeeinrichtung aufweisen, über welche beispielsweise an den Benutzer Alarme und dergleichen ausgegeben werden können.

Wie oben erwähnt, kann die Datenerfassungseinrichtung oder die Datensammeleinrichtung entscheiden, welche Daten wie weiterverarbeitet werden. Dabei kann auch eine Analyse der Daten bei einem Hersteller nach dessen Vorgaben erfolgen.

Die vorliegende Erfindung ist weiterhin auf eine Vorrichtung zur Fernüberwachung einer Herstellungsanlage und insbesondere einer Verpackungsanlage gerichtet. Dabei weist die Anlage eine Vielzahl von Arbeitseinheiten auf sowie eine Datensammeleinrichtung, mit welcher diese Arbeitseinheiten wenigstens teilweise und/oder wenigstens zeitweise zur Datenübertragung verbunden sind wobei die Datensammeleinrichtung dazu geeignet und bestimmt ist, für die Arbeitseinheiten relevante Daten zu sammeln. Weiterhin weist die Vorrichtung eine Datenfernübertragungseinrichtung auf, um Daten von der Datensammeleinrichtung kabellos an eine Datenerfassungseinrichtung zu übertragen.

Erfindungsgemäß sind unterschiedliche Anteile dieser Daten an unterschiedliche Empfänger übermittelbar und durch einen Benutzer ist wenigstens teilweise bestimmbar, welche Daten an welchen Empfänger übermittelt werden.

Bevorzugt sind durch einen Benutzer und insbesondere einen Benutzer der Datensammeleinrichtung wenigstens eine Eigenschaft und insbesondere eine Art und/oder ein Umfang der zu übertragenden Daten bestimmbar.

Es wird daher auch vorrichtungsseitig vorgeschlagen, dass ein Benutzer auswählen kann, welche Daten in welcher Weise weiterverarbeitet werden und insbesondere, an welchen oder welche Empfänger diese Daten übermittelt werden. Bei einer weiteren vorteilhaften Ausführungsform entscheidet die Datenerfassungseinrichtung über eine Weiterverarbeitung der jeweiligen Daten. Bei einer weiteren bevorzugten Ausführungsform wäre es auch möglich, dass die Datensammeleinrichtung über diese Daten bzw. deren Weiterverarbeitung entscheidet.

Bei einer weiteren vorteilhaften Ausführungsform weist die Vorrichtung eine Datengruppierungseinrichtung auf, welche bei der Datensammeleinrichtung eingehende Daten unterschiedlichen Gruppen von Daten zuteilt. Dabei ist bevorzugt eine Analyseeinrichtung vorgesehen, welche die eingehenden Daten dahingehend analysiert, ob diesen Daten Zustände der Arbeitseinheiten zugrunde liegen, welche einen bestimmten Fehler der Anlage hervorrufen können. Diese unterschiedlichen Datengruppen können an unterschiedliche Empfänger übermittelt werden.

Bei einer weiteren vorteilhaften Ausführungsform besteht eine zeitweise Kommunikationsverbindung zwischen der Datensammeleinrichtung und der Datenerfassungseinrichtung.

Bei einer weiteren vorteilhaften Ausführungsform weist die Vorrichtung eine Vielzahl von Messeinrichtungen auf, um charakteristische Werte der Arbeitseinheiten zu messen. Dabei kann es sich beispielsweise um Geschwindigkeitswerte, Druckwerte, Temperaturwerte und dergleichen handeln.

Die vorliegende Erfindung wird nunmehr an einem konkreten Beispiel erläutert. Falls bei einer bei einem Kunden befindlichen Maschine Störungen auftreten (beispielsweise Fehler, Störungen oder sonstige Meldungen), werden diese bevorzugt in einem eigenen Logfile oder einem Speicher abgelegt. Die Datensammeleinrichtung, die - wie oben erwähnt - lokal im Netzwerk des Kunden steht, sammelt dann diese Daten (Dateninformationen) von der Maschine und diese werden ausgewertet. Daneben können auch aktuelle oder historische Zustände gesammelt werden.

Bei der Auswertung wird dann nach einem Muster gesucht, um die Produktivität zu steigern und bevorzugt, um zusammenhängende Situationen zu erkennen.

Dabei ist es auch möglich, auf vordefinierte Regeln zu achten, die der Kunde bzw. Benutzer bevorzugt selbst einrichten kann. Diese Regeln können dabei bestimmen, welche Daten an welchen Empfänger übermittelt werden und/oder welche Daten für welchen Empfänger freigegeben werden.

Die oben beschriebenen Regeln setzen bei dem Ergebnis der ausgewerteten Daten ein. Sollte eine bestimmte Regel bei der Auswertung greifen, so wird bevorzugt über das Alarmmanagement der entsprechende Ansprechpartner informiert. Dies kann beispielsweise der Maschinenbetreiber sein oder auch der Maschinenhersteller. Dieser kann dann jeweils individuell auf die entsprechende Meldung, den Alarm und dergleichen reagieren.

Bevorzugt holt sich die Erfassungseinrichtung die ausgewerteten Daten von der wenigstens einen Datensammeleinrichtung und bevorzugt von der Vielzahl an Datensammeleinrichtungen, die auch an unterschiedlichen Standorten stehen, ab. Dies kann - wie oben erwähnt - durch einen VPN-Tunnel erfolgen, der temporär nur an einem Port aufgebaut ist. Sobald die Daten übertragen worden sind, kann der entsprechende Tunnel wieder getrennt werden.

Bei der zentralen Einheit werden bevorzugt die Daten je nach Auswertung weiterverarbeitet.

Das Alarmmanagement kann eine graphische Benutzeroberfläche (GUI, graphical user interface) aufweisen. Diese kann im Baukastenprinzip aufgebaut sein. Dabei ist es möglich, neue Regeln vorzudefinieren oder hinzuzufügen und bevorzugt beispielsweise mittels drag-anddrop der jeweiligen Maschine oder einem Kunden zuzuordnen und/oder zu aktivieren. Weiterhin ist es möglich, dass bestehende Alarme bearbeitet oder entfernt werden. Auch wäre es möglich, die oben erwähnten Prioritäten für bestimmte Alarme zu verschieben bzw. zu verändern. Weiterhin kann das beschriebene Alarmmanagement von Mitarbeitern des Herstellers benutzt werden, wobei hierzu ein eigenes Datenmanagement verwendet werden kann. Falls neue Regeln erstellt werden, kann auch entschieden werden, auf welche Maschine oder Komponente diese Regeln angewandt werden.

Weitere Vorteile und Ausführungsformen ergeben sich aus den beigefügten Zeichnungen:
Darin zeigen:
- Fig. 1: eine Darstellung einer erfindungsgemäßen Anlage; und
- Fig. 2: eine Darstellung zur Veranschaulichung einer Alarmerzeugung.

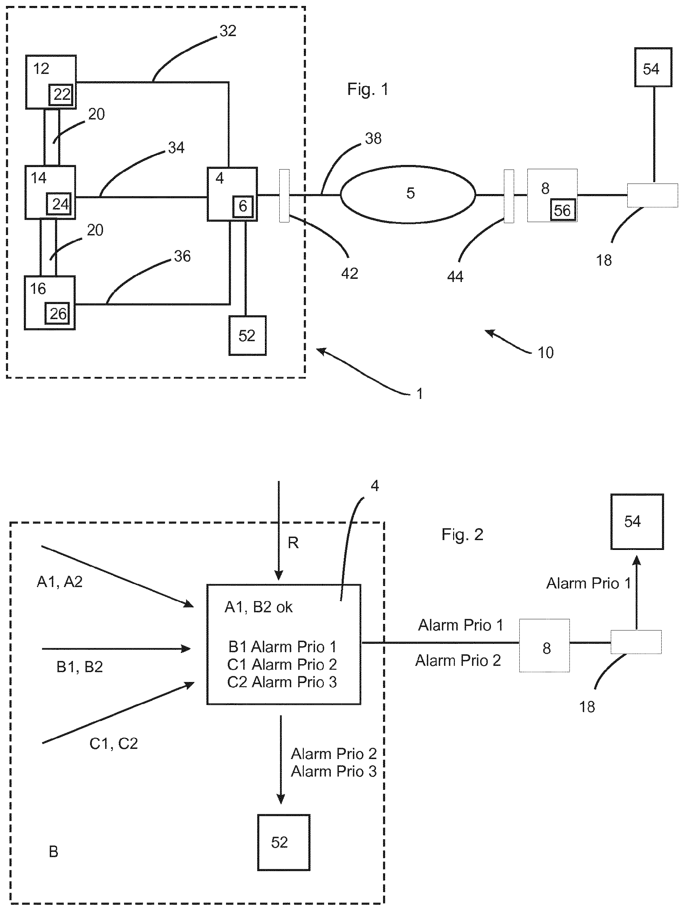

Figur 1 zeigt eine schematische Darstellung einer erfindungsgemäßen Vorrichtung 10 zur Fernüberwachung einer Anlage 1. Diese Anlage 1 weist hier drei Arbeitseinheiten 12, 14 und 16 auf, welche zur Behandlung von Behältnissen dienen. Genauer gesagt werden die Behältnisse hier sukzessiv von der Arbeitseinheit 12, anschließend von der Arbeitseinheit 14 und schließlich der Arbeitseinheit 16 behandelt. So kann es sich beispielsweise bei der Arbeitseinheit 12 um eine Blasformmaschine handeln, welche Kunststoffvorformlinge zu Kunststoffbehältnissen 14 umformt. An diese Blasformmaschine 12 kann sich eine Sterilisationseinrichtung anschließen, welche die Kunststoffbehältnisse sterilisiert. An diese Sterilisationseinheit wiederum kann sich eine Fülleinrichtung 16 anschließen. Die Erfindung ist jedoch nicht auf diese speziellen Arbeitseinheiten beschränkt, vielmehr können auch andere Arbeitseinheiten vorgesehen sein, wie oben erwähnt. Zwischen den einzelnen Arbeitseinheiten befinden sich jeweils Transporteinheiten, welche die Behältnisse von einer Arbeitseinheit zu der nächsten Arbeitseinheit befördern. Dabei ist es auch möglich, dass die einzelnen Arbeitseinheiten 12, 14 und 16 aufeinander synchronisiert sind und beispielsweise in konstanten Arbeitsgeschwindigkeiten arbeiten.

Das Bezugszeichen 20 kennzeichnet schematisch ein oder mehrere Transporteinrichtungen, welche die Behältnisse transportiert.

Die Bezugszeichen 22, 24 und 26 kennzeichnen Messeinrichtungen, welche Messwerte der einzelnen Arbeitseinheiten 12, 14 und 16 erfassen. Über Kommunikationsverbindungen 32, 34 und 36 werden diese Messwerte an die mit 4 bezeichnete Datensammeleinrichtung übergeben. Diese Datensammeleinrichtung kann bereits entscheiden, welche der genannten Parameter in welcher Weise weiterbehandelt werden sollen.

Das Bezugszeichen 6 kennzeichnet eine Datenübertragungseinrichtung, welche über eine gesicherte VPN-Leitung 38 und das Internet 5 die entsprechenden Daten an die Datenerfassungseinrichtung 8 weiterleitet. Die Bezugszeichen 42 und 44 kennzeichnen dabei jeweils Sicherungsmechanismen, wie sogenannte Firewalls. Die Datenerfassungseinrichtung 8 kann ebenfalls entscheiden, welche Daten wie behandelt werden. So ist es möglich, dass einige der Daten zurückgegeben werden an einen Maschinenbetreiber oder dass entsprechende Alarmstufen ausgelöst werden. Andere Daten können an einen Maschinenüberwacher 18, bei dem es sich beispielsweise um einen Mitarbeiter des Maschinenherstellers handeln kann, weitergegeben werden.

Das Bezugszeichen 56 kennzeichnet eine Selektoreingabevorrichtung. Mittels dieser Selektoreingabevorrichtung kann der Benutzer etwa vorgeben, nach welchen Kriterien Daten an wen übertragen werden sollen. Bei der in Fig. 1 gezeigten Situation befindet sich die Datenerfassungseinrichtung 8 am Standort des Maschinenherstellers. Dieser kann damit diese entsprechenden Vorgaben treffen. Es wäre jedoch auch möglich, dass sich die Datenerfassungseinrichtung 8 am Ort der Maschine selbst befindet, diese etwa in die Datensammeleinrichtung integriert ist. Entsprechend würde sich hier auch die Datenselektoreingabevorrichtung am Ort der Maschine befinden.

Das Bezugszeichen 52 kennzeichnet eine Informationsausgabeeinrichtung, welche zu der Anlage 10 gehört. Über diese Informationsausgabeeinrichtung können an den Maschinenbetreiber B Informationen über Fehlerzustände ausgegeben werden. Eine entsprechende Informationsausgabeeinheit 54 kann sich auch auf Seiten des Herstellers 18 befinden.

Die Erfindung schlägt nun vor, dass im Bereich der Datensammeleinrichtung 4 oder der Datenerfassungseinrichtung 8 entschieden werden kann, welche Informationen wie behandelt werden bzw. wie weiterverarbeitet werden. Eine derartige Entscheidung könnte jedoch auch in beiden Instanzen, d.h. sowohl im Bereich der Datensammeleinrichtung als auch im Bereich der Datenerfassungseinrichtung 8 vorgenommen werden.

Figur 2 zeigt eine schematische Darstellung zur Veranschaulichung des erfindungsgemäßen Verfahrens. Hier werden von den einzelnen Arbeitseinheiten (nicht gezeigt) Messwerte bzw. allgemein Werte A1, A2, B1, B2 und C1, C2 an die Datensammeleinrichtung 4 übergeben. Die Werte A1 und B2 sind ordnungsgemäß und es ist kein Fehler erkennbar. Die Auswertung des Wertes B1 ergibt, dass ein Fehler mit einer Priorität 1 vorliegt. Die Auswertung des Wertes C1 ergibt, dass ein Alarm mit der Priorität 2 ausgelöst werden müsste und der Wert C2 würde zu einem Alarm mit der Priorität 3 führen. Durch die Nutzerkonfigurierung wird nunmehr bewirkt, dass die beiden Alarme Priorität 2 und Priorität 3 an den Maschinenbetreiber weitergleitet werden und der Alarm Priorität 1 an den Maschinenhersteller. Daneben wird auch der Alarm der Priorität 2 ebenfalls eskalations- und zeitgesteuert an die Datenerfassungseinrichtung 8 weitergeleitet. Auf diese Weise kann einerseits dem Interesse des Maschinennutzers Rechnung getragen werden, dass dieser nicht alle Daten preisgeben muss, und andererseits können dennoch abhängig von Eskalationsstufen die Alarme an den Maschinenbetreiber oder auch an den Hersteller weitergeleitet werden. Im Bereich der Erfassungseinrichtung 8 können auch Speichereinrichtungen vorgesehen sein, welche beispielsweise Fehlerzustände speichern und so gegebenenfalls zu einem späteren Zeitpunkt die Abarbeitung ermöglichen.

Die hier beschriebene Auswertung der einzelnen Mess- bzw. Erfassungswerte A1 - C2 könnte auch in der Datenerfassungseinrichtung 8 vorgenommen werden. Auch diese kann dafür Sorge tragen, dass bestimmte Alarme oder Daten nicht an den Maschinenhersteller, sondern nur an den Maschinenbenutzer B ausgegeben werden. Das Bezugszeichen R kennzeichnet die vorgebbaren Regeln, auf Basis derer die Auswertung der einzelnen Messwerte erfolgt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- A1: Wert
- A2: Wert
- B: Maschinenbetreiber
- B1: Wert
- B2: Wert
- C1: Wert
- C2: Wert
- R: Regel
- 1: Vorrichtung/(Verpackungs-)Anlage
- 4: Datensammeleinrichtung/Netzwerkeinrichtung
- 5: Internet
- 6: Datenübertragungseinrichtung
- 8: Datenerfassungseinrichtung
- 10: Anlage
- 12: Arbeitseinheit/Blasformmaschine
- 14: Arbeitseinheit
- 16: Arbeitseinheit/Fülleinrichtung
- 18: Maschinenüberwacher/Hersteller
- 22: Messeinrichtung
- 24: Messeinrichtung
- 26: Messeinrichtung
- 32: Kommunikationsverbindung
- 34: Kommunikationsverbindung
- 36: Kommunikationsverbindung
- 38: VPN-Leitung
- 42: Sicherungsmechanismus
- 44: Sicherungsmechanismus
- 52: Informationsausgabeeinrichtung
- 54: Informationsausgabeeinrichtung
- 56: Selektoreingabevorrichtung

## Patentansprüche

1. Verfahren zur Fernüberwachung einer Verpackungsanlage (1) der getränkeherstellenden Industrie, wobei die Anlage (1) eine Vielzahl von Arbeitseinheiten (12, 14, 16) aufweist, sowie eine Datensammeleinrichtung (4) mit welcher diese Arbeitseinheiten (12, 14, 16) wenigstens teilweise und/oder wenigstens zeitweise zur Datenübertragung verbunden sind, wobei die Datensammeleinrichtung für die Arbeitseinheiten (12, 14, 16) relevante erfasste Daten sammelt und wobei eine Datenübertragungseinrichtung diese erfassten Daten von der Datensammeleinrichtung (4) an eine Datenerfassungseinrichtung (8) überträgt,
wobei unterschiedliche Anteile dieser erfassten Daten an unterschiedliche Empfänger (B, 18) übermittelt werden und durch einen Benutzer wenigstens teilweise bestimmbar ist, welche Daten an welchen Empfänger (B, 18) übermittelt werden, wobei die Datenübertragungseinrichtung (6) lediglich eine Teilmenge der erfassten Daten überträgt, wobei diese Teilmenge durch den Benutzer konfigurierbar ist, **dadurch gekennzeichnet, dass**
die Daten hinsichtlich ihrer Relevanz bzw. Wichtigkeit für den Betrieb der Anlage (1) eingeteilt bzw. eingruppiert werden, sodass die Einteilung unter Berücksichtigung eines in Hinblick auf diese Daten zu erwartenden Störungsfalles erfolgt und damit Daten, welche auf einen schwerwiegenden oder in Kürze bevorstehenden Ausfall der Anlage schließen lassen, einer anderen Gruppe zugeordnet werden, als Daten, welche auf eine fortgeschrittene Abnutzung eines bestimmten Maschinenelements oder eine Verschmutzung des Maschinenelements schließen lassen.

2. Verfahren nach Anspruch 1,
**dadurch gekennzeichnet, dass**
die Übertragung der Daten von der Datensammeleinrichtung (4) an die Datenerfassungseinrichtung (8) über das Internet (5) erfolgt.

3. Verfahren nach wenigstens einem der vorangegangenen Ansprüche,
**dadurch gekennzeichnet, dass**
die von der Datensammeleinrichtung (4) gesammelten Daten wenigstens zeitweise gespeichert werden.

4. Verfahren nach wenigstens einem der vorangegangenen Ansprüche,
**dadurch gekennzeichnet, dass**
wenigstens ein Anteil der gesammelten Daten von Messeinrichtungen (22, 24, 26) gemessene Daten wenigstens einer Arbeitseinheit (12, 14, 16) sind.

5. Verfahren nach wenigstens einem der vorangegangenen Ansprüche,
**dadurch gekennzeichnet, dass**
die Anlage an einem ersten geographischen Ort angeordnet ist und die Datenerfassungseinrichtung (8) an einem zweiten geographischen Ort, der sich von dem ersten geographischen Ort unterscheidet, angeordnet ist.

6. Verfahren nach Anspruch 5,
**dadurch gekennzeichnet, dass**
ein Anteil der Daten an dem ersten geographischen Ort ausgegeben wird.

7. Verfahren nach wenigstens einem der vorangegangenen Ansprüche,
**dadurch gekennzeichnet, dass**
die Daten aus einer Gruppe von Daten ausgewählt sind, welche Rohdaten, aggregierte Daten, Datensicherungen, Backups, Logfiles, Störmeldungen, Alarme und dergleichen enthält.

8. Verfahren nach wenigstens einem der vorangegangenen Ansprüche,
**dadurch gekennzeichnet, dass**
wenigstens eine Arbeitseinheit (12, 14, 16) aus einer Gruppe von Arbeitseinheiten (12, 14, 16) ausgewählt ist, welche Umformungseinrichtungen zum Umformen von Kunststoffvorformlingen zu Kunststoffbehältnissen, Erwärmungseinrichtungen zum Erwärmen von Kunststoffvorformlingen, Sterilisationseinrichtungen zum Sterilisieren von Kunststoffvorformlingen oder Kunststoffflaschen, Fülleinrichtungen zum Befüllen von Behältnissen, Etikettiereinrichtungen zum Etikettieren von Behältnissen, Druckeinrichtungen zum Bedrucken von Behältnissen, Verschließeinrichtungen zum Verschließen von Behältnissen und dergleichen enthält.

9. Verfahren nach wenigstens einem der vorangegangenen Ansprüche,
**dadurch gekennzeichnet, dass**
von der Datenübertragungseinrichtung (6) nur bestimmte Daten an die Datenerfassungseinrichtung (8) übertragen werden und/oder von der Datenerfassungseinrichtung (8) nur bestimmte Daten weiterverarbeitet werden.

10. Vorrichtung zur Fernüberwachung einer Verpackungsanlage (1) der getränkeherstellenden Industrie, und umfassend diese Verpackungsanlage (1)
wobei die Anlage (1) eine Vielzahl von Arbeitseinheiten aufweist sowie eine Datensammeleinrichtung (4) mit welcher diese Arbeitseinheiten (12, 14, 16) wenigstens teilweise und/oder wenigstens zeitweise zur Datenübertragung verbunden sind, wobei die Datensammeleinrichtung (4) dazu geeignet und bestimmt ist, für die Arbeitseinheiten (12, 14, 16) relevante erfasste Daten zu sammeln und wobei weiterhin eine Datenübertragungseinrichtung (6) vorgesehen ist, die dazu geeignet und bestimmt ist diese erfassten Daten von der Datensammeleinrichtung (2) an eine Datenerfassungseinrichtung (8) der Vorrichtung zu übertragen,
wobei unterschiedliche Anteile dieser Daten an unterschiedliche Empfänger (B, 18) übermittelbar sind und durch einen Benutzer wenigstens teilweise bestimmbar ist, welche Daten an welchen Empfänger (B, 18) übermittelt werden, wobei die Datenübertragungseinrichtung (6) dazu eingerichtet und dafür vorgesehen ist lediglich eine Teilmenge der erfassten Daten zu übertragen, wobei diese Teilmenge durch den Benutzer konfigurierbar ist, **dadurch gekennzeichnet dass**
die Daten hinsichtlich ihrer Relevanz bzw. Wichtigkeit für den Betrieb der Anlage (1) einteilbar bzw. eingruppierbar sind, sodass die Einteilung unter Berücksichtigung eines in Hinblick auf diese Daten zu erwartenden Störungsfalles erfolgt und damit Daten, welche auf einen schwerwiegenden oder in Kürze bevorstehenden Ausfall der Anlage schließen lassen, einer anderen Gruppe zuordenbar sind, als Daten, welche auf eine fortgeschrittene Abnutzung eines bestimmten Maschinenelements oder eine Verschmutzung des Maschinenelements schließen lassen.

## Claims

1. Method for remote monitoring of a packaging plant (1) for the beverage production industry, wherein the plant (1) has a plurality of working units (12, 14, 16), as well as a data collection device (4), to which these working units (12, 14, 16) are connected at least partially and/or at least intermittently for data transmission, wherein the data collection device collects relevant data for the working units (12, 14, 16) and wherein a data transmission device transmits data from the data collection device (4) to a data recording device (8),
wherein different amounts of these data are transmitted to different receivers (B, 18) and a user can determine at least partially which data are transmitted to which receiver (B, 18), wherein the data transmission device (6) merely transmits a partial amount of the recorded data, wherein this partial amount can be configured by the user,
**characterised in that**
the data are classified or grouped with regard to their relevance or importance for the operation of the plant (1), so that the classification takes place taking account of a malfunction to be expected with regard to these data and thus data which suggest a serious or imminent failure of the plant can be assigned to different group from data which suggest advanced wear of a specific machine element or contamination of the machine element.

2. The method according to claim 1,
**characterised in that**
the transmission of the data from the data collection device (4) to the data recording device (8) takes place via the internet (5).

3. Method according to at least one of the preceding claims,
**characterised in that**
the data collected by the data collection device (4) stored at least temporarily.

4. Method according to at least one of the preceding claims,
**characterised in that**
at least one amount of collected data is data from at least one working unit (12, 14, 16) measured by measuring devices (22, 24, 26).

5. Method according to at least one of the preceding claims,
**characterised in that**
the plant is arranged at a first geographical location and the data recording device (8) is at a second geographical location which is different from the first geographical location.

6. The method according to claim 5,
**characterised in that**
an amount of data is output to the first geographical location.

7. Method according to at least one of the preceding claims,
**characterised in that**
the data are selected from a group of data which contains raw data, aggregated data, data safeguards, backups, logfiles, fault messages, alerts and the like.

8. Method according to at least one of the preceding claims,
**characterised in that**
at least one working unit (12, 14, 16) is selected from a group of working units (12, 14, 16) which includes transforming devices for transforming plastic parisons into plastic containers, heating devices for heating plastic parisons, sterilising devices for sterilising plastic parisons or plastic bottles, filling devices for filling containers, labelling devices for labelling containers, printing devices for printing containers, closing devices for closing containers and the like.

9. Method according to at least one of the preceding claims,
**characterised in that**
only specific data are transmitted from the data transmission device (6) to the data recording device (8) and/or only specific data are further processed by the data recording device (8).

10. Apparatus for remote monitoring of a packaging plant (1) of the beverage producing industry and comprising said packaging plant (1), wherein the plant (1) has a plurality of working units as well as a data collection device (4), to which these working units (12, 14, 16) are connected at least partially and/or at least intermittently for data transmission, wherein the data collection device (4) is suitable and intended to collect relevant data for the working units (12, 14, 16) and wherein furthermore a data transmission device (6) is provided which is suitable and intended to transmit data from the data collection device (2) to a data recording device (8),
wherein different amounts of these data can be transmitted to different receivers (B, 18) and a user can determine at least partially which data are transmitted to which receiver (B, 18), wherein the data transmission device (6) is suitable and intended to merely transmits a partial amount of the recorded data, wherein this partial amount can be configured by the user,
**characterised in that**
the data are classified or grouped with regard to their relevance or importance for the operation of the plant (1), so that the classification takes place taking account of a malfunction to be expected with regard to these data and thus data which suggest a serious or imminent failure of the plant can be assigned to different group from data which suggest advanced wear of a specific machine element or contamination of the machine element.

## Revendications

1. Procédé de surveillance à distance d'une installation de conditionnement (1) de l'industrie de production de boissons, dans lequel l'installation (1) présente une pluralité d'unités de travail (12, 14, 16), ainsi qu'un système de collecte de données (4), auquel lesdites unités de travail (12, 14, 16) sont reliées au moins en partie et/ou au moins temporairement pour la transmission de données, dans lequel le système de collecte de données pour les unités de travail (12, 14, 16) collecte des données détectées pertinentes et dans lequel un système de transmission de données transmet lesdites données détectées du système de collecte de données (4) à un système de détection de données (8),
dans lequel différentes proportions desdites données détectées sont transférées à différents récepteurs (B, 18) et un utilisateur peut déterminer au moins en partie les données qui sont transférées à quel récepteur (B, 18), dans lequel le système de transmission de données (6) ne transmet qu'une partie des données détectées, dans lequel ladite partie peut être configurée par l'utilisateur,
**caractérisé en ce que**
les données sont classées ou regroupées en fonction de leur pertinence ou de leur importance pour le fonctionnement de l'installation (1) si bien que la classification est effectuée en tenant compte d'une panne attendue au regard de ces données, et ainsi des données, qui laissent conclure à une panne grave ou imminente de l'installation, sont associées à un groupe autre que des données qui laissent conclure à une usure avancée d'un élément de machine déterminé ou à un encrassement de l'élément de machine.

2. Procédé selon la revendication 1,
**caractérisé en ce que**
la transmission des données du système de collecte de données (4) au système de collecte de données (8) est effectuée par Internet (5).

3. Procédé selon au moins l'une quelconque des revendications précédentes,
**caractérisé en ce que**
les données collectées par le système de collecte de données (4) sont stockées au moins temporairement.

4. Procédé selon au moins l'une quelconque des revendications précédentes,
**caractérisé en ce que**
au moins une partie des données collectées sont des données d'au moins une unité de travail (12, 14, 16) mesurées par des systèmes de mesure (22, 24, 26).

5. Procédé selon au moins l'une quelconque des revendications précédentes,
**caractérisé en ce que**
l'installation est disposée sur un premier lieu géographique et le système de détection de données (8) est disposé sur un deuxième lieu géographique qui est différent du premier lieu géographique.

6. Procédé selon la revendication 5,
**caractérisé en ce que**
une partie des données est émise sur le premier lieu géographique.

7. Procédé selon au moins l'une quelconque des revendications précédentes,
**caractérisé en ce que**
les données sont sélectionnées dans un groupe de données, qui contiennent des données brutes, des données agrégées, des sauvegardes de données, des sauvegardes, des fichiers journaux, des messages d'erreur, des alarmes et similaires.

8. Procédé selon au moins l'une quelconque des revendications précédentes,
**caractérisé en ce que**
au moins une unité de travail (12, 14, 16) est choisie dans un groupe d'unités de travail (12, 14, 16), qui contient des dispositifs de mise en forme pour la mise en forme de préformes en matière plastique en des récipients en matière plastique, des systèmes de chauffage pour le chauffage de préformes en matière plastique, des systèmes de stérilisation pour la stérilisation de préformes en matière plastique ou de bouteilles en matière plastique, de systèmes de remplissage pour le remplissage de récipients, de systèmes d'étiquetage pour l'étiquetage de récipients, de systèmes d'impression pour l'impression de récipients, de systèmes de fermeture pour la fermeture de récipients, et similaires.

9. Procédé selon au moins l'une quelconque des revendications précédentes,
**caractérisé en ce que**
seules certaines données sont transmises par le système de transmission de données (6) au système de détection de données (8) et/ou seules certaines données sont traitées ultérieurement par le système de détection de données (8).

10. Dispositif de surveillance à distance d'une installation de conditionnement (1) de l'industrie de production de boissons, et comprenant ladite installation de conditionnement (1), dans lequel l'installation (1) présente une pluralité d'unités de travail ainsi qu'un système de collecte de données (4), auquel lesdites unités de travail (12, 14, 16) sont reliées au moins en partie et/ou au moins temporairement pour la transmission de données, dans lequel le système de collecte de données (4) est adapté pour et se destine à collecter des données détectées pertinentes pour les unités de travail (12, 14, 16) et dans lequel est prévu par ailleurs un système de transmission de données (6) qui est adapté pour et se destine à transmettre lesdites données détectées du système de collecte de données (2) à un système de détection de données (8) du dispositif,
dans lequel différentes proportions desdites données peuvent être transférées à différents récepteurs (B, 18) et un utilisateur peut déterminer au moins en partie les données, qui sont transférées à quel récepteur (B, 18), dans lequel le système de transmission de données (6) est configuré et est prévu pour ne transmettre qu'une partie des données détectées, dans lequel cette partie peut être configurée par l'utilisateur, **caractérisé en ce que**
les données peuvent être classées ou regroupées en fonction de leur pertinence ou de leur importance pour le fonctionnement de l'installation (1) si bien que la classification est effectuée en tenant compte d'une panne attendue au regard de ces données et qu'ainsi les données, qui laissent conclure à une panne grave ou imminente de l'installation, peuvent être associées à un groupe autre que les données qui laissent conclure à une usure avancée d'un élément de machine déterminé ou un encrassement de l'élément de machine.
